(19) Europäisches Patentamt
European Patent Office
Office européen des brevets

(11) **EP 1 285 287 B1**

## (12) FASCICULE DE BREVET EUROPEEN

(45) Date de publication et mention
de la délivrance du brevet:
**28.06.2006 Bulletin 2006/26**

(21) Numéro de dépôt: **01938313.2**

(22) Date de dépôt: **23.05.2001**

(51) Int Cl.:
*G02B 5/02* *(2006.01)*     *H01J 61/35* *(2006.01)*
*G02F 1/1335* *(2006.01)*

(86) Numéro de dépôt international:
**PCT/FR2001/001591**

(87) Numéro de publication internationale:
**WO 2001/090787 (29.11.2001 Gazette 2001/48)**

(54) **COUCHE DIFFUSANTE**

STREUSCHICHT

DIFFUSING COATING

(84) Etats contractants désignés:
**AT BE CH CY DE DK ES FI FR GB GR IE IT LI LU MC NL PT SE TR**

(30) Priorité: **23.05.2000 FR 0006584**

(43) Date de publication de la demande:
**26.02.2003 Bulletin 2003/09**

(73) Titulaire: **SAINT-GOBAIN GLASS FRANCE**
**92400 Courbevoie (FR)**

(72) Inventeurs:
• **MARZOLIN, Christian**
**F-75003 Paris (FR)**
• **ALLANO, Jean-Luc**
**F-95170 Deuil la Barre (FR)**

(74) Mandataire: **Muller, René**
**SAINT-GOBAIN RECHERCHE**
**39, quai Lucien Lefranc**
**93300 Aubervilliers (FR)**

(56) Documents cités:
**EP-A- 0 688 818        US-A- 5 869 128**
**US-A- 5 948 481**

• **PATENT ABSTRACTS OF JAPAN vol. 1999, no. 05, 31 mai 1999 (1999-05-31) & JP 11 038232 A (BRIDGESTONE CORP), 12 février 1999 (1999-02-12)**
• **PATENT ABSTRACTS OF JAPAN vol. 2000, no. 02, 29 février 2000 (2000-02-29) & JP 11 323196 A (TOPPAN PRINTING CO LTD;NIPPON KAYAKU CO LTD), 26 novembre 1999 (1999-11-26)**
• **PATENT ABSTRACTS OF JAPAN vol. 014, no. 442 (P-1109), 20 septembre 1990 (1990-09-20) & JP 02 173701 A (SUMITOMO CHEM CO LTD), 5 juillet 1990 (1990-07-05)**
• **PATENT ABSTRACTS OF JAPAN vol. 1997, no. 09, 30 septembre 1997 (1997-09-30) & JP 09 113707 A (DAINIPPON PRINTING CO LTD), 2 mai 1997 (1997-05-02)**

## Description

L'invention se rapporte au domaine des boîtes à lumière et elle concerne plus précisément une couche diffusante, destinée à être déposée sur un substrat pour homogénéiser la source lumineuse.

Bien qu'elle ne soit pas limitée à de telles applications, l'invention sera plus particulièrement décrite en référence à des couches utilisées pour homogénéiser la lumière émise depuis une boîte à lumière, en particulier une lampe plane. Une telle lampe plane peut notamment être une source de lumière ou « back-light » notamment utilisée dans des ordinateurs à écrans plats pour fournir l'éclairage d'un écran à cristaux liquides. Il peut également s'agir de lampes planes architecturales utilisées par exemple sur des plafonds, des sols, ou des murs. Il peut encore s'agir de lampes planes à usage urbain telles que des lampes pour panneaux publicitaires ou encore des lampes pouvant constituer des étagères ou des fonds de vitrines d'exposition.

Ces lampes planes peuvent encore trouver des applications dans d'autres domaines tels que par exemple l'industrie automobile ; il est en effet envisageable de réaliser des toits pour automobile dont au moins une partie comporte une telle lampe pour se substituer notamment à l'éclairage actuellement connu d'un habitacle automobile. Il est encore possible de réaliser le rétro-éclairage ou « backlighting » des tableaux de bord des véhicules automobiles.

Par ailleurs, l'expression lampe plane doit être comprise comme correspondant à une réalisation faite à partir de deux substrats substantiellement plans initialement mais qui peuvent toutefois présenter une légère courbure nécessaire pour une application donnée.

Ces lampes planes, par exemple telles que décrites dans le brevet US 6,034,470, sont donc constituées de deux substrats substantiellement plans, tels que des feuilles de verre, sur lesquelles sont déposées différentes couches constitutives de la lampe. Par exemple, sur la première feuille de verre qui constitue la feuille arrière de la lampe sont déposées sur la face interne des électrodes d'argent recouvertes d'un diélectrique et sur l'autre face, des couches d'alumine et de phosphore. Sur la face interne de l'autre feuille de verre sont déposées des couches d'alumine et de phosphore, la couche d'alumine formant des zones de réflexion permettant d'homogénéiser la lumière émise par ladite lampe. D'autres matériaux tels que l'oxyde de titane peuvent encore servir de couches réfléchissantes.

Il apparaît toutefois que la lumière ainsi émise, notamment dans le cas des « back-lights » pour écran à cristaux liquides, n'est pas suffisamment homogène et présente des contrastes trop importants. Des solutions pour améliorer l'homogénéité de la lumière de ces lampes ont déjà été réalisées. Des traitements de la surface avant de la feuille de verre, tel qu'un dépolissage par sablage ou des impressions à chaud à la surface du verre ou encore une coloration opaline du verre dans la masse, ont notamment été proposés mais ne sont pas suffisants et souvent trop onéreux. Une solution satisfaisante du point de vue de l'homogénéité consiste à recouvrir la face avant de la feuille de verre d'un plastique tel qu'un polycarbonate ou un polymère acrylique dépoli. Cette solution présente toutefois l'inconvénient de nécessiter plusieurs couches de revêtement plastique qui conduisent à une épaisseur globale d'au moins 5 mm. Une telle épaisseur de revêtement(s) venant s'ajouter aux autres éléments constituant l'écran conduit à une augmentation considérable de l'épaisseur globale de la lampe, ce qui va à l'encontre de la volonté actuelle qui tend vers une diminution de l'encombrement des écrans en terme d'épaisseur. L'augmentation de l'épaisseur induit aussi une diminution de la luminance de la lampe. Un autre inconvénient d'une telle lampe est que le revêtement plastique ne résiste pas aux températures élevées imposées pour sa réalisation, notamment lors de la mise en oeuvre des étapes de dépôt des électrodes et de scellage périphérique des feuilles de verre.

Les inventeurs se sont ainsi donné pour mission de trouver un moyen conduisant à une homogénéité de la lumière émise par une lampe plane au moins équivalente à la solution précédemment évoquée et qui n'en présente pas les inconvénients, notamment en termes d'encombrement et de perte de la luminance.

Ce but est atteint selon l'invention par une couche diffusante constituée de particules minérales agglomérées dans un liant, lesdites particules présentant un diamètre moyen compris entre 0,3 et 2 microns, ledit liant étant dans une proportion comprise entre 10 et 40 % en volume et les particules formant des agrégats dont la dimension est comprise entre 0,5 et 20 microns, et de préférence inférieure à 5 microns, ladite couche présentant une atténuation de contraste supérieure à 40 % et de préférence supérieure à 50 %.

La demande de brevet JP 11038232 A divulgue une couche diffusante comprenant une résine transparente et des particules composites constituées d'une particule mère de dimension moyenne entre 1 et 10 microns en résine et d'une couche de particules de dimensions moyennes entre 0,1 et 0,8 microns.

L'atténuation de contraste est déterminée par une mesure du contraste de mire ; une mire transparente constituée de lignes noires de largeur 8 mm et espacées les unes des autres de 8 mm est placée sur une table à lumière. La face supérieure de la couche diffusante à mesurer est disposée à une distance de 3 mm de la mire et une image est obtenue par une caméra et analysée. L'atténuation de contraste est définie par c, tel que :

$$c = 1 - (C/C_0)$$

avec C étant égal à l'écart type de L sur la moyenne de L et Co étant égal à l'écart type de Lo sur la moyenne de Lo, Lo étant l'image de la mire sans diffuseur, et L étant l'image de la mire en présence du diffuseur.

Une telle couche diffusante peut être utilisée en lieu et place des couches plastiques précédemment évoquées avec une épaisseur nettement inférieure pour une homogénéité de la lumière donnée d'une lampe donnée.

Selon une réalisation préférée de l'invention, la couche présente une transmission lumineuse $T_L$ supérieure à 45 % et de préférence supérieure à 60 %. La transmission lumineuse est mesurée sous illuminant D65.

Selon une réalisation avantageuse de l'invention, les particules sont des particules semi-transparentes et de préférence des particules minérales telles que des oxydes, des nitrures ou des carbures.

Les particules seront de préférence choisies parmi les oxydes de silicium, aluminium, de zircone, de titane, de cérium, ou d'un mélange d'au moins deux de ces oxydes.

De telles particules peuvent être obtenues par tous moyens connus de l'homme du métier, et notamment par précipitation ou par pyrogénation. Selon l'invention, les particules présentent une granulométrie telle qu'au moins 50% des particules s'écartent de moins de 50% du diamètre moyen.

Selon une réalisation avantageuse de l'invention, le liant présente une tenue en température suffisante pour résister aux températures de fonctionnement et/ou à la température de scellage de la lampe si la couche est réalisée durant l'assemblage de la lampe et notamment avant le scellement de celle-ci. A cet égard, un liant minéral s'avère particulièrement intéressant lorsque la couche diffusante doit résister à une température élevée, supérieure à environ 300°C.

Lorsque la couche est en position extérieure, le liant est également avantageusement choisi avec une résistance à l'abrasion suffisante pour subir sans endommagement toutes les manipulations de la lampe, par exemple, notamment lors du montage de l'écran plat.

En fonction des exigences, le liant pourra être choisi minéral, par exemple lorsqu'on souhaite obtenir une couche qui résiste aux températures élevées, ou organique, notamment pour simplifier la réalisation de ladite couche, la réticulation pouvant être obtenue simplement, par exemple à froid. Le choix d'un liant minéral dont la résistance en température est importante va notamment permettre la réalisation de lampes planes de grandes dimensions sans aucun risque de voir apparaître une dégradation de la couche du fait par exemple de tubes fluorescents qui provoquent un échauffement considérable. En effet, il est apparu avec les solutions connues une dégradation du film plastique en température qui rend donc très délicate la réalisation de lampes planes de grandes dimensions.

Avantageusement, le liant possède un indice différent de celui des particules et la différence entre ces deux indices est de préférence d'au moins 0,1. L'indice des particules est avantageusement supérieur à 1,7 et celui du liant est de préférence inférieur à 1,6.

Selon une réalisation préférée de l'invention, le liant est choisi parmi les liants minéraux, tels que les silicates de potassium, les silicates de sodium, les silicates de lithium et les phosphates d'aluminium, et les liants organiques, tels que les polymères de type polyalcool vinylique, les résines thermodurcissables et les acryliques. De manière particulièrement préférée, le liant est minéral.

Pour favoriser la formation d'agrégats à la dimension souhaitée, l'invention prévoit avantageusement l'adjonction d'au moins un additif conduisant à une répartition aléatoire des particules dans le liant. De façon préférée, l'additif ou agent de dispersion est choisi parmi les agents suivants : un acide, une base, des ions divalents ou des polymères ioniques de faible masse moléculaire, notamment inférieur à 50 000 g/mol.

Il est encore possible d'ajouter d'autres agents et par exemple un agent mouillant tel que des tensioactifs non ioniques, anioniques ou cationiques, pour fournir une couche homogène à une grande échelle.

Il est encore possible d'ajouter des agents de modification rhéologique, tels que des éthers cellulosiques.

La couche ainsi définie peut être déposée selon une épaisseur comprise entre 1 et 20 microns. Les méthodes de dépôts d'une telle couche peuvent être tous moyens connus de l'homme du métier tels que des dépôts par sérigraphie, par enduction d'une peinture, par « dip-coating », par « spin-coating », par « flow-coating », par pulvérisation, ...

Lorsque l'épaisseur souhaitée de la couche déposée est supérieure à 2 microns, on utilise avantageusement un procédé de dépôt du type sérigraphie.

Lorsque l'épaisseur de la couche est inférieure à 4 microns, le dépôt est de préférence effectué par flow-coating ou par pulvérisation.

L'invention prévoit également de réaliser une couche dont l'épaisseur varie selon la zone de couverture sur la surface ; une telle réalisation peut permettre de corriger des inhomogénéités intrinsèques d'une source de lumière. Par exemple, il est possible de cette façon de corriger la variation d'éclairement d'un tube fluorescent sur sa longueur. Selon une autre réalisation conduisant sensiblement au même effet de correction des inhomogénéités intrinsèques d'une source de lumière, l'invention prévoit de réaliser une couche dont la densité de recouvrement varie sur la surface de dépôt ; il s'agit par exemple d'un dépôt réalisé par sérigraphie dont la densité de points peut varier d'une zone totalement couverte à une zone de points dispersés, la transition étant progressive ou non.

Selon l'invention de telles couches peuvent être déposées sur des substrats transparents ou semi-transparents, possédant une forme plane ou non selon les applications. Les applications envisagées par l'invention sont notamment les lampes planes par exemple utilisées pour l'éclairage des écrans à cristaux liquides, ou bien pour de l'éclairage architectural ou bien encore de l'éclairage urbain.

Dans le cas des lampes planes, la couche est avantageusement déposée sur la feuille de verre constituant la face avant de la lampe.

Selon un premier mode de réalisation, la couche est déposée sur la face de la feuille de verre orientée vers l'intérieur de la lampe ; selon une telle réalisation, la couche doit être déposée sur la feuille de verre durant la réalisation de la lampe. Selon cette réalisation, la couche doit présenter une résistance en température suffisante pour résister aux différents traitements thermiques nécessaires à la réalisation d'une telle lampe, notamment pour effectuer les dépôts correspondant à la réalisation des électrodes et pour effectuer le scellement périphérique des deux feuilles de verre constituant la structure de la lampe plane. La couche selon l'invention sera alors avantageusement réalisée avec un liant minéral.

Selon ce premier mode de réalisation, la couche diffusante selon l'invention, peut selon une variante être déposée directement sur le verre ou bien selon une seconde variante être déposée sur les couches déjà déposées sur le verre. Si des espaceurs sont nécessaires, notamment pour maintenir un espace uniforme entre les deux feuilles de verre, l'invention prévoit avantageusement un dépôt de la couche diffusante en maintenant des zones libres correspondant aux emplacements prévus pour les espaceurs de sorte que l'adhésion ceux-ci ne soit pas perturbée par la couche selon l'invention. De tels espaces libres peuvent facilement être obtenus en choisissant un dépôt de la couche selon une technique de sérigraphie.

Selon un second mode de réalisation, la couche est déposée sur la face de la feuille de verre orientée vers l'extérieur de la lampe ; selon ce mode de réalisation, la couche diffusante selon l'invention est avantageusement choisie avec des propriétés renforcées de résistance mécanique et plus particulièrement de résistance à l'abrasion. La couche est alors avantageusement réalisée avec un liant minéral ou organique en proportion supérieure à 15 % et de préférence à 20 %.

Selon une variante de réalisation de l'invention concernant l'utilisation de la couche diffusante dans la réalisation d'une lampe plane, ladite couche diffusante est déposée sur un substrat transparent ou semi-transparent indépendant des feuilles de verre constituant la structure de la lampe plane. Une telle réalisation peut consister à déposer la couche diffusante sur un substrat en verre maintenu à distance de la face avant de la lampe ; cette réalisation permet selon les lois de la physique d'améliorer encore l'effet diffusant de la couche. En contrepartie, le volume ou l'encombrement d'une telle réalisation redevient équivalent aux solutions connues antérieurement mais alors avec des performances supérieures quant à la diffusion.

L'invention prévoit encore avantageusement de réaliser un dépôt d'une couche diffusante de chaque côté du substrat, que celui-ci soit une des feuilles de verre constituant la structure de la lampe plane ou un substrat indépendant.

Les couches diffusantes ainsi présentées selon l'invention permettent donc de réaliser des lampes planes par exemple destinées à l'éclairage d'écrans à cristaux liquides. Comparées aux solutions antérieurement connues, la couche selon l'invention permet de réduire l'encombrement de ladite lampe pour des performances données en terme d'atténuation de contraste.

Selon des variantes d'utilisations de ces couches, les performances en terme d'atténuation de contraste de la lumière émise par des lampes planes peuvent être améliorées pour un encombrement desdites lampes équivalent à celui des techniques antérieures.

D'autres détails et caractéristiques avantageuses ressortiront ci-après de la description des exemples de réalisation de l'invention qui suivent.

Le premier exemple correspond à une couche selon l'invention destinée à être déposée sur la face avant d'une lampe plane pour l'éclairage d'un écran à cristaux liquides.

Le mélange suivant a été réalisé :

Dans 65,5 g d'eau désionisée, on introduit 15 g de particules d'alumine de diamètre moyen égal à 1 micron auquel on ajoute 0,4 g d'acide polyacrylique à 50 % comme additif induisant la dispersion et 0,3 g d'un agent mouillant, le méthoxylate d'octylphénol commercialisé par la société Union Carbide sous le nom triton X100.

La solution ainsi préparée est mélangée dans une turbine pendant deux minutes.

19 g d'une solution aqueuse à 20 % d'alcool polyvinylique sont ensuite ajoutés et le mélange ainsi formé repasse en turbine pendant cinq minutes.

Une couche diffusante est ensuite réalisé à partir de ce mélange sur une feuille de verre par une technique de « flow coating». Le dépôt du mélange est réalisé avec une quantité telle que la couche une fois sèche présente une épaisseur de 1,5 micron.

L'exemple 2 est une couche réalisée selon l'invention à partir du mélange de l'exemple 1 déposé sur une feuille de verre pour former une couche sèche présentant une épaisseur de 4 microns.

L'exemple 3 est une couche réalisée selon l'invention à partir du mélange de l'exemple 1 déposé sur une feuille de verre pour former une couche sèche présentant une épaisseur de 1 micron.

L'exemple 4 est une couche selon l'invention à partir du mélange suivant.

Dans 65,5 g d'eau désionisée, on introduit 15 g de particules d'alumine de diamètre moyen égal à 1 micron auquel on ajoute 0,4 g d'acide polyacrylique à 50 % comme additif induisant la dispersion et 0,3 g d'un agent mouillant, le méthoxylate d'octylphénol commercialisé par la société Union Carbide sous le nom triton X100.

La solution ainsi préparée est mélangée dans une turbine pendant deux minutes.

32 g d'une solution aqueuse à 20 % d'alcool polyvinylique sont ensuite ajoutés et le mélange ainsi formé repasse en turbine pendant cinq minutes.

Une couche diffusante est ensuite réalisée à partir de ce mélange sur une feuille de verre par une technique de « flow coating ». Le dépôt du mélange est réalisé avec une quantité telle que la couche une fois sèche présente une épaisseur de 4 microns.

L'exemple 5 est une couche selon l'invention à partir du mélange suivant.

Dans 65,5 g d'eau désionisée, on introduit 15 g de particules d'alumine de diamètre moyen égal à 1 micron auquel on ajoute 0,4 g d'acide polyacrylique à 50 % comme additif induisant la dispersion et 0,3 g d'un agent mouillant, le méthoxylate d'octylphénol commercialisé par la société Union Carbide sous le nom triton X100.

La solution ainsi préparée est mélangée dans une turbine pendant deux minutes.

50 g d'une solution aqueuse à 20 % d'alcool polyvinylique sont ensuite ajoutés et le mélange ainsi formé repasse en turbine pendant cinq minutes.

Une couche diffusante est ensuite réalisée à partir de ce mélange sur une feuille de verre par une technique de « flow coating ». Le dépôt du mélange est réalisé avec une quantité telle que la couche une fois sèche présente une épaisseur de 4 microns.

L'exemple 6 est une couche réalisée selon l'invention à partir d'un mélange décrit ci-après dans lequel intervient un liant minéral.

Dans 72 g d'eau désionisée, on introduit 15 g de particules d'alumine de diamètre moyen égal à 1 micron auquel on ajoute 0,4 g d'acide polyacrylique à 50 % comme additif induisant la dispersion. De la soude est ensuite ajoutée jusqu'à atteindre un pH égal à 10. Le mélange est ensuite homogénéisé dans une turbine pendant deux minutes.

On ajoute ensuite 12,7 g de solution aqueuse à 25 % de liant silicate de lithium et 0,3 g d'un agent mouillant, le méthoxylate d'octylphénol commercialisé par la société Union Carbide sous le nom triton X100.

La solution ainsi préparée repasse dans une turbine pendant cinq minutes.

Une couche diffusante est ensuite réalisée à partir de ce mélange sur une feuille de verre par une technique de « flow coating ». Le dépôt du mélange est réalisé avec une quantité telle que la couche une fois sèche présente une épaisseur de 2 microns.

Les exemples 7 et 8 sont des exemples comparatifs qui reprennent une technique de l'art antérieur évoquée précédemment qui consiste à utiliser comme élément diffusant des films plastiques dépolis qui sont placés devant la face avant de la lampe plane.

L'exemple 7 correspond à un film plastique d'une épaisseur de 1 mm.

L'exemple 8 correspond à la superposition de deux films plastique identiques à celui de l'exemple 7 pour obtenir une épaisseur totale de 2 mm.

L'exemple 9 est une couche réalisée selon l'invention à partir du mélange décrit ci-après.

Dans 549 g d'eau désionisée, on ajoute 4 g d'une suspension d'acide polyacrylique à 50 % en poids dans l'eau et de la soude (NaOH) de manière à obtenir un pH égal à 9. On ajoute ensuite au mélange 288 g d'une suspension aqueuse à 52 % en poids de particules de zircone de diamètre moyen égal à 1 micron (commercialisée par la société NORTON sous le nom de SLURRY 9839). Le mélange ainsi préparé est introduit dans une turbine pendant 10 minutes. On ajoute ensuite 158 g d'une suspension de liant polysilicate de lithium à 20 % en poids dans l'eau (commercialisée par la société GRACE sous le nom de Ludox) et 1 g d'agent mouillant (commercialisé par la société UNION CARBIDE sous le nom de Triton X100).

Une couche diffusante est ensuite réalisée à partir de ce mélange sur une feuille de verre par une technique de « flow coating ». Le dépôt du mélange est réalisé en quantité telle que la couche une fois sèche présente une épaisseur de 2 microns.

L'exemple 10 est une couche réalisée selon l'invention à partir du mélange suivant.

Dans 687 g d'eau désionisée, on ajoute 4 g d'une suspension d'acide polyacrylique à 50 % en poids dans l'eau et de la soude (NaOH) de manière à obtenir un pH égal à 9. On ajoute ensuite au mélange 150 g de particules d'alumine de diamètre moyen égal à 1 $\mu$m. Le mélange ainsi préparé est introduit dans une turbine pendant 10 minutes. On ajoute ensuite 158 g d'une suspension de liant polysilicate de lithium à 20 % en poids dans l'eau (commercialisée par la société GRACE sous le nom de Ludox) et 1 g d'agent mouillant (commercialisé par la société UNION CARBIDE sous le nom de Triton X100).

Une couche diffusante est ensuite réalisée à partir de ce mélange sur une feuille de verre par une technique de « flow coating ». Le dépôt du mélange est réalisé en quantité telle que la couche une fois sèche présente une épaisseur de 2,5 microns.

L'exemple 11 est un exemple comparatif qui consiste à utiliser le mélange suivant dans lequel les particules ont une faible taille.

Dans 87 g d'eau désionisée, on ajoute 4 g d'une suspension d'acide polyacrylique à 50 % en poids dans l'eau et de la soude (NaOH) de manière à obtenir un pH égal à 9. On ajoute ensuite 750 g d'une suspension de particules d'alumine (diamètre moyen 0,2 micron) à 20 % en poids dans l'eau. Le mélange ainsi préparé est introduit dans une turbine pendant 10 minutes. On ajoute ensuite 158 g d'une suspension de polysilicate de lithium à 20 % dans l'eau (commercialisé par la société GRACE sous le nom de Ludox) et 1 g d'agent mouillant (commercialisé par la société UNION CARBIDE sous le nom de Triton X100).

Une couche diffusante est ensuite réalisée à partir de ce mélange sur une feuille de verre par une technique de « flow coating ». Le dépôt du mélange est réalisé en quantité telle que la couche une fois sèche présente une épaisseur de 2 microns.

Les différentes couches diffusantes selon les exemples 1 à 11 ainsi déposées sur une feuille de verre sont ensuite testées selon la méthode de mesure d'atténuation de contraste précédemment décrite.

Des mesures de transmission lumineuse sous illuminant D65 sont également effectuées pour ces différents exemples.

On a également apprécié visuellement la résistance à la rayure par l'ongle des couches diffusantes selon les exemples 3 et 9 à 11. La résistance est qualifiée de « bonne » lorsque la couche ne se détache pas de la feuille de verre et de « mauvaise « lorsqu'il y a délamination de la couche avec apparition du verre après que la surface a été rayée par l'ongle.

La tenue en température des couches diffusantes est déterminée après avoir soumis lesdites couches à 450°C pendant 1 heure. Une tenue notée "-" signifie que la couche examinée à l'oeil nu est au moins partiellement dégradée. A l'inverse, la tenue est désignée "+" lorsque la couche conserve sont aspect d'origine.

Les différents résultats obtenus sont reportés dans le tableau qui suit :

| Exemple | Atténuation de contraste (%) | $T_L$ (%) | Résistance à la rayure | Tenue en température |
|---|---|---|---|---|
| 1 | 52 | 66 | n.d. | - |
| 2 | 65 | 47 | n.d. | - |
| 3 | 43 | 76 | mauvaise | - |
| 4 | 54 | 64 | n.d. | - |
| 5 | 48 | 69 | n.d. | - |
| 6 | 62 | 60 | n.d. | + |
| 7 (comparatif) | 43 | 72 | n.d. | - |
| 8 (comparatif) | 62 | 51 | n.d. | - |
| 9 | 64 | 57 | bonne | + |
| 10 | 66 | 55 | bonne | + |
| 11 (comparatif) | < 20 | 78 | bonne | + |
| n.d. : non déterminé | | | | |

Les résultats obtenus montrent que les couches diffusantes selon l'invention permettent d'obtenir une atténuation de contraste et donc une homogénéité de la lumière, par exemple dans une lampe plane pour écran à cristaux liquides, meilleure que celle des techniques déjà connues pour un encombrement identique et une transmission lumineuse donnée.

Ces résultats montrent également que pour un encombrement identique et pour une atténuation de contraste donnée, les couches diffusantes selon l'invention permettent d'obtenir une transmission lumineuse meilleure que celle obtenue selon les techniques antérieures.

De ces résultats, il est encore possible de déduire que pour une atténuation de contraste et une transmission lumineuse données, les couches diffusantes selon l'invention permettent de réaliser par exemple une lampe plane avec un encombrement réduit par rapport aux techniques antérieures.

Il convient de noter que les couches réalisées à partir d'un liant minéral possèdent une résistance à la rayure et une tenue en température améliorées.

**EP 1 285 287 B1**

**Revendications**

1. Couche diffusante constituée de particules agglomérées dans un liant **caractérisée en ce que** les particules sont minérales et présentent un diamètre moyen compris entre 0,3 et 2 microns, **en ce que** le liant est dans une proportion comprise entre 10 et 40 % en volume, **en ce que** les particules forment des agrégats dont la dimension est comprise entre 0,5 et 20 microns, et de préférence inférieure à 5 microns, et **en ce que** la couche présente une atténuation de contraste supérieure à 40 %.

2. Couche diffusante selon la revendication 1, **caractérisée en ce qu'**elle présente une transmission lumineuse $T_L$ supérieure à 45 % et de préférence supérieure à 60 %

3. Couche diffusante selon la revendication 1 ou 2, **caractérisée en ce que** les particules sont des particules semi-transparentes et de préférence les particules sont choisies parmi les oxydes, les nitrures ou les carbures.

4. Couche diffusante selon l'une des revendications 1 à 3, **caractérisée en ce que** les particules sont des oxydes de silicium, d'aluminium, de zircone, de titane, de cérium, ou un mélange d'au moins deux de ces oxydes.

5. Couche diffusante selon l'une des revendications 1 à 4, **caractérisée en ce qu'**elle comporte un additif dispersant tel qu'un acide, une base, des ions divalents ou des polymères ioniques de faible masse moléculaire.

6. Couche diffusante selon l'une des revendications 1 à 5, **caractérisée en ce qu'**elle présente une épaisseur comprise entre 1 et 20 microns.

7. Couche diffusante selon l'une des revendications 1 à 6, **caractérisée en ce que** le liant est choisi parmi les liants minéraux, tels que les silicates de potassium, les silicates de sodium, les silicates de lithium, et les phosphates d'aluminium, et les liants organiques, tels que les polymères de type polyalcool vinylique, les résines thermodurcissables et les acryliques.

8. Couche diffusante selon la revendication 7, **caractérisée en ce que** le liant est minéral.

9. Utilisation d'une couche diffusante telle que décrite selon l'une des revendications 1 à 8 pour réaliser un substrat diffusant dans une boîte à lumière, en particulier une lampe plane.

10. Utilisation d'une couche diffusante selon la revendication 9, **caractérisée en ce qu'**elle est déposée sur un substrat plan, de préférence en verre.

11. Utilisation d'une couche diffusante selon l'une des revendications 9 ou 10, **caractérisée en ce que** le substrat plan est une des feuilles de verre constituant une lampe plane.

12. Utilisation d'une couche diffusante selon l'une des revendications 10 ou 11, **caractérisée en ce qu'**elle est déposée des deux côtés du substrat plan.

13. Utilisation d'une couche diffusante selon l'une des revendications 9 à 12, **caractérisée en ce qu'**elle est déposée selon une méthode de dépôt par sérigraphie, par enduction d'une peinture, par « dip-coating », par « spin-coating », par « flow-coating » ou par pulvérisation.

14. Utilisation d'une couche diffusante selon l'une des revendications 9 à 13, **caractérisée en ce que** l'épaisseur et/ou la densité de recouvrement de la couche varie sur la surface de dépôt.

**Claims**

1. Diffusing coating consisting of agglomerated particles in a binder, **characterized in that** the particles are mineral particles and have a mean diameter of between 0.3 and 2 microns, **in that** the binder is in a proportion of between 10 and 40% by volume, **in that** the particles form aggregates having a size of between 0.5 and 20 microns, preferably less than 5 microns, and **in that** the coating has a contrast attenuation of greater than 50%.

2. Diffusing coating according to Claim 1, **characterized in that** it has a light transmission $T_l$ of greater than 45% and

7

preferably greater than 60%.

3. Diffusing coating according to Claim 1 or 2, **characterized in that** the particles are semitransparent particles and preferably the particles are chosen from oxides, nitrides and carbides.

4. Diffusing coating according to one of Claims 1 to 3, **characterized in that** the particles are silicon, aluminium, zirconium, titanium or cerium oxides, or a mixture of at least two of these oxides.

5. Diffusing coating according to one of Claims 1 to 4, **characterized in that** it includes a dispersing additive such as an acid, a base, divalent ions or ionic polymers of low molecular weight.

6. Diffusing coating according to one of Claims 1 to 5, **characterized in that** it has a thickness of between 1 and 20 microns.

7. Diffusing coating according to one of Claims 1 to 6, **characterized in that** the binder is chosen from mineral binders, such as potassium silicates, sodium silicates, lithium silicates and aluminium phosphates, and organic binders, such as polymers of the polyvinyl alcohol type, thermosetting resins and acrylics.

8. Diffusing coating according to Claim 7, **characterized in that** the binder is a mineral binder.

9. Use of a diffusing coating as described in one of Claims 1 to 8 for producing a diffusing substrate in a light box, in particular a flat lamp.

10. Use of a diffusing coating according to Claim 9, **characterized in that** it is deposited on a flat substrate, preferably made of glass.

11. Use of a diffusing coating according to either of Claims 9 and 10, **characterized in that** the flat substrate is one of the glass sheets constituting a flat lamp.

12. Use of a diffusing coating according to either of Claims 10 and 11, **characterized in that** it is deposited on both sides of the flat substrate.

13. Use of a diffusing coating according to one of Claims 9 to 12, **characterized in that** it is deposited by a screen-printing, paint-coating, dip-coating, spin-coating, flow-coating or spraying deposition method.

14. Use of a diffusing coating according to one of Claims 9 to 13, **characterized in that** the thickness and/or the covering density of the coating varies over the deposition surface.

**Patentansprüche**

1. Lichtstreuende Schicht, die aus in einem Bindemittel agglomerierten Teilchen besteht, **dadurch gekennzeichnet, dass** die Teilchen anorganisch sind und einen mittleren Durchmesser von 0,3 bis 2 Mikrometern aufweisen, dass das Bindemittel mit einem Anteil von 10 bis 40 Vol.-% vorliegt, dass die Teilchen Aggregate bilden, deren Durchmesser 0,5 bis 20 Mikrometer und vorzugsweise weniger als 5 Mikrometer beträgt, und dass die Schicht eine Kontrastabschwächung von über 40 % aufweist.

2. Lichtstreuende Schicht nach Anspruch 1, **dadurch gekennzeichnet, dass** sie einen Lichttransmissionsgrad $T_L$ von über 45 % und vorzugsweise über 60 % aufweist.

3. Lichtstreuende Schicht nach Anspruch 1 oder 2, **dadurch gekennzeichnet, dass** die Teilchen halbtransparent und vorzugsweise aus Oxiden, Nitriden oder Carbiden ausgewählt sind.

4. Lichtstreuende Schicht nach einem der Ansprüche 1 bis 3, **dadurch gekennzeichnet, dass** die Teilchen aus Siliciumdioxid, Aluminiumoxid, Zirconiumdioxid, Titandioxid und Cerdioxid oder einem Gemisch aus mindestens zwei dieser Oxide bestehen.

5. Lichtstreuende Schicht nach einem der Ansprüche 1 bis 4, **dadurch gekennzeichnet, dass** sie ein Dispergiermittel wie eine Säure, eine Base, zweiwertige Ionen oder ionische Polymere mit niedrigem Molekulargewicht enthält.

6. Lichtstreuende Schicht nach einem der Ansprüche 1 bis 5, **dadurch gekennzeichnet, dass** ihre Dicke 1 bis 20 Mikrometer beträgt.

7. Lichtstreuende Schicht nach einem der Ansprüche 1 bis 6, **dadurch gekennzeichnet, dass** das Bindemittel aus anorganischen Bindemitteln wie Kaliumsilicaten, Natriumsilicaten, Lithiumsilicaten und Aluminiumphosphaten und organischen Bindemitteln wie Polymeren vom Typ Polyvinylalkohol, wärmeaushärtbaren Harzen und Acrylharzen ausgewählt ist.

8. Lichtstreuende Schicht nach Anspruch 7, **dadurch gekennzeichnet, dass** das Bindemittel anorganisch ist.

9. Verwendung einer wie in einem der Ansprüche 1 bis 8 beschriebenen lichtstreuenden Schicht zur Herstellung eines lichtstreuenden Substrats in einem Lichtband, insbesondere einer flachen Lampe.

10. Verwendung einer lichtstreuenden Schicht nach Anspruch 9, **dadurch gekennzeichnet, dass** sie auf ein vorzugsweise aus Glas bestehendes flaches Substrat aufgebracht worden ist.

11. Verwendung einer lichtstreuenden Schicht nach Anspruch 9 oder 10, **dadurch gekennzeichnet, dass** das flache Substrat eine der Glasscheiben ist, die eine flache Lampe bilden.

12. Verwendung einer lichtstreuenden Schicht nach Anspruch 10 oder 11, **dadurch gekennzeichnet, dass** sie auf beide Seiten des flachen Substrats aufgebracht worden ist.

13. Verwendung einer lichtstreuenden Schicht nach einem der Ansprüche 9 bis 12, **dadurch gekennzeichnet, dass** sie durch ein Beschichtungsverfahren wie Siebdruck, durch Auftragen eines Anstrichstoffs, durch "dip-coating", "spin-coating", "flow-coating" oder Aufsprühen aufgebracht worden ist.

14. Verwendung einer lichtstreuenden Schicht nach einem der Ansprüche 9 bis 13, **dadurch gekennzeichnet, dass** Dicke und/oder Bedeckungsdichte der Schicht auf der beschichteten Oberfläche variiert/variieren.